Europäisches Patentamt

European Patent Office

Office européen des brevets

(11) Publication number: **0 456 381 A1**

# EUROPEAN PATENT APPLICATION

(21) Application number: **91303735.4**

(51) Int. Cl.⁵: **G02C 11/02**

(22) Date of filing: **25.04.91**

(30) Priority: **09.05.90 JP 48877/90 U**

(43) Date of publication of application:
**13.11.91 Bulletin 91/46**

(84) Designated Contracting States:
**DE ES FR GB IT**

(71) Applicant: **SEELEX KABUSHIKI KAISHA**
**No 14-3, 5-chome, Ninomiya**
**Fukui-shi, Fukui-ken (JP)**

(72) Inventor: **Nitta, Yukuo**
**No. 5-14-3 Ninomiya**
**Fukui-shi, Fukui-ken (JP)**

(74) Representative: **Carpenter, David et al**
**MARKS & CLERK Alpha Tower Suffolk Street**
**Queensway**
**Birmingham B1 1TT (GB)**

(54) **Hanging ornaments for spectacles.**

(57) A hanging ornament for use with a pair of spectacles comprises an ornamental element (7a, 7b, 7c) and is characterized in that the ornamental element (7a, 7b, 7c) is attachable to and removable from the pair of spectacles by way of an attachment means, the attachment means comprising an anchor member (6a, 6b, 6c) for attachment to the pair of spectacles and a fastener (8) for removably connecting the ornamental element (7a, 7b, 7c) to the anchor member (6a, 6b, 6c).

EP 0 456 381 A1

FIG.1

FIG.2

This invention relates to ornaments for spectacles, and more particularly to ornaments and decorations freely attachable to, and removable from, spectacles. Generally, spectacles are decorated with various ornaments and decorations to make a personal statement.

In the prior art, ornamental materials such as jewels and chains are fixed to a pair of spectacles and cannot be freely exchanged. These decorated spectacles can be worn in a private party or meeting, but they may not be appropriate for a formal party or meeting. Thus, a different pair of spectacles must be worn that are appropriate for the occasion. Therefore, a person must have various pairs of spectacles, one for each situation which can be very expensive. Even if a person can afford numerous pairs of spectacles for various occasions, it is very inconvenient to have to carry more than one pair of spectacles. In any case, spectacles wearers are generally forced to wear the same pair of spectacles in spite of the situations.

In view of these circumstances, a new spectacles frame has recently been developed. An end piece of a rim of the spectacles is bifurcated in form, whereon a hole is established to receive an ornament. The ornament is adapted to fit into the hole and be fixed in place by a rivet. Some ornaments are designed to fit correctly in the hole in accordance with the design of the spectacles.

This prior art, however, has the following defects. In order to exchange the ornament for a new ornament, the rivet must be removed. This is quite difficult and virtually impossible without professional help. In addition, the range of ornaments available is limited to the special standard shape or size in accordance with the spectacles frame, and therefore wearers cannot select freely desired shapes or sizes and are restricted in what can be worn.

In view of the above problems in the prior art, including the difficulty in changing ornaments and having limited designs available, this invention has been developed.

It is an object of the present invention to provide ornamental and decorative means for spectacles, wherein exchanging of ornaments is simple and the shape and/or size of the ornament is not limited.

According to a first aspect of the present invention there is provided a hanging ornament for use with a pair of spectacles, the hanging ornament comprising an ornamental element and characterized in that the ornamental element is attachable to and removable from the pair of spectacles by way of an attachment means, the attachment means comprising an anchor member for attachment to the pair of spectacles and a fastener for removably connecting the ornamental element to the anchor member.

Preferably, the anchor member is a sleeve arranged to be fitted over an arm or end piece of the pair of spectacles.

Desirably, the sleeve is made from a soft synthetic material.

Alternatively, the anchor member comprises a base arranged to be attached to the pair of spectacles, the base being provided with a loop to which the fastener is attachable.

Preferably, the base is arranged to be attached to a hinge of the pair of spectacles.

Preferably, the base is arranged to be attached to the pair of spectacles by adhesive means.

Alternatively, the anchor member comprises a shaft screw of a hinge of the pair of spectacles, the shaft screw having a hole formed in a downwardly projecting end thereof, the fastener being engagable in the hole.

In another alternative, the anchor member comprises a cap nut arranged to be attached to a shaft screw of a hinge of the pair of spectacles, the cap nut having a hole formed therein, the fastener being engagable in the hole.

Preferably, the fastener is a clasp including a loop which can be opened and closed by movement of a knob portion.

According to a second aspect of the present invention there is provided a pair of spectacles for use with a hanging ornament according to the first aspect of the present invention, and characterized in that the pair of spectacles incorporates the anchor member of the hanging ornament.

According to a third aspect of the present invention there is provided a pair of spectacles and a hanging ornament according to the first aspect of the present invention, the anchor member of the hanging ornament being carried by the frame of the spectacles.

Preferably, the frame of the spectacles also carries an anchor member of a further hanging ornament.

The invention will further be described by way of example with reference to the accompanying drawings in which similar parts are accorded the same reference numerals and in which:

Figure 1 is a perspective view of a pair of spectacles,

Figure 2 is a partial perspective view showing an ornament attached to the spectacles of Figure 1 according to a first embodiment of this invention,

Figure 3 is a partial perspective view showing an ornament attached to the spectacles of Figure 1 according to a second embodiment of the present invention,

Figure 4 is an enlarged perspective view of the second embodiment of the present invention,

Figure 5 is a partial perspective view showing an ornament attached to the spectacles of Figure 1 according to a third embodiment of the present invention,

Figure 6 is an enlarged perspective view of the third embodiment according to the present invention shown in Figure 5, showing how to connect a shaft screw, a fastener, and an ornament, and Figure 7 is an enlarged perspective view of a fourth embodiment according to the present invention showing how to connect a shaft screw, a cap nut and an ornament.

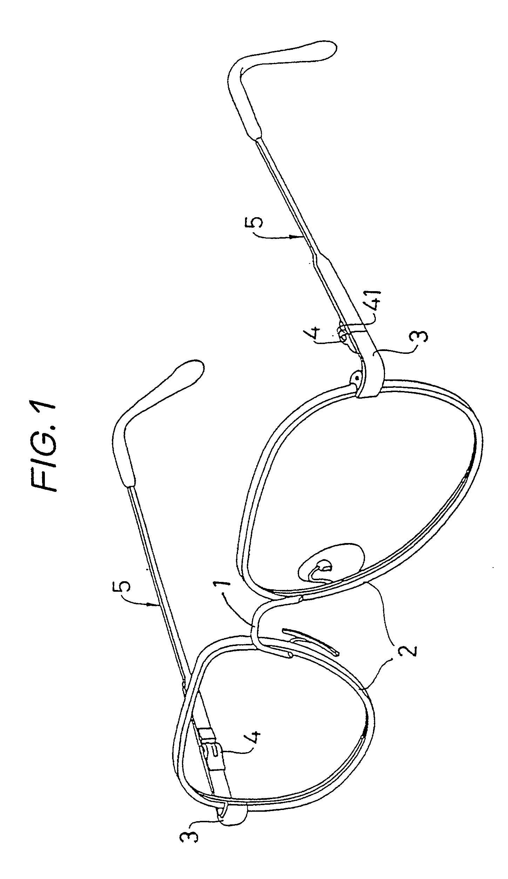

With reference to Figure 1, a bridge (1) interconnects two rims (2), an end piece being formed on each rim (2). Respective arms (5) are connected to the end pieces (3) by way of respective hinges (4), each hinge including a shaft screw (41). The spectacles described above are furnished with ornamental means as described in the first through fourth embodiments respectively described hereinafter.

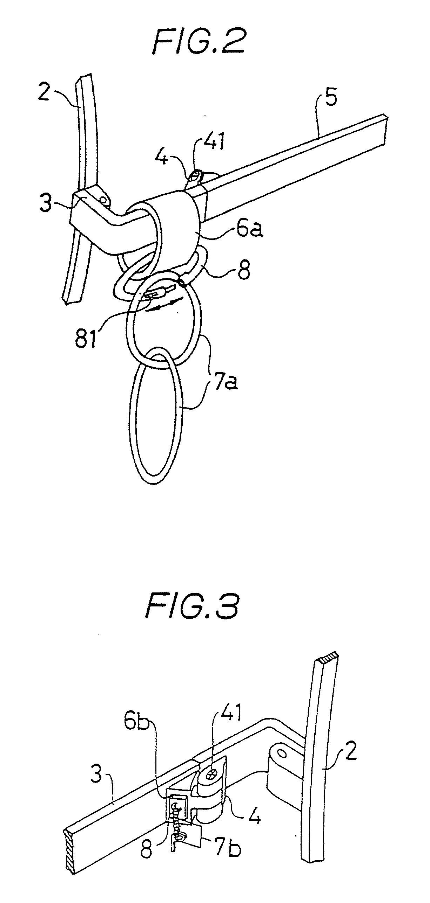

Figure 2 is a partial perspective view of an ornament attached to a pair of spectacles according to the first embodiment of the present invention. A sleeve (6a) made of, for example, soft synthetic resin having good elasticity, is fitted over an arm of the spectacles and engages around the end piece (3). An ornament body (7a) made of two interconnected metal rings is then coupled to the sleeve (6a) by way of a fastener (8). The fastener (8) is a well-known clasp, the ring of which can be opened and closed by movement of a knob portion (81). Thus, the ornament body (7a) is securely connected to the spectacles by way of the sleeve (6a).

The spectacles of the first embodiment shown in Figure 2 and as described above can include ornamental materials other than the rings, since the ornaments can be freely exchanged in a simple manner. The ornamental materials need only include loops to connect with the fastener (8). Therefore shapes and/or sizes of the ornaments are not limited. Such ornaments can be hung in the same manner on both sides of the spectacles. When the wearer does not want to wear the attached ornament, the sleeve (6) need only be removed from the arm, or the ornament (7a) removed by opening the fastener (8) and detaching the ornament (7a) from the sleeve.

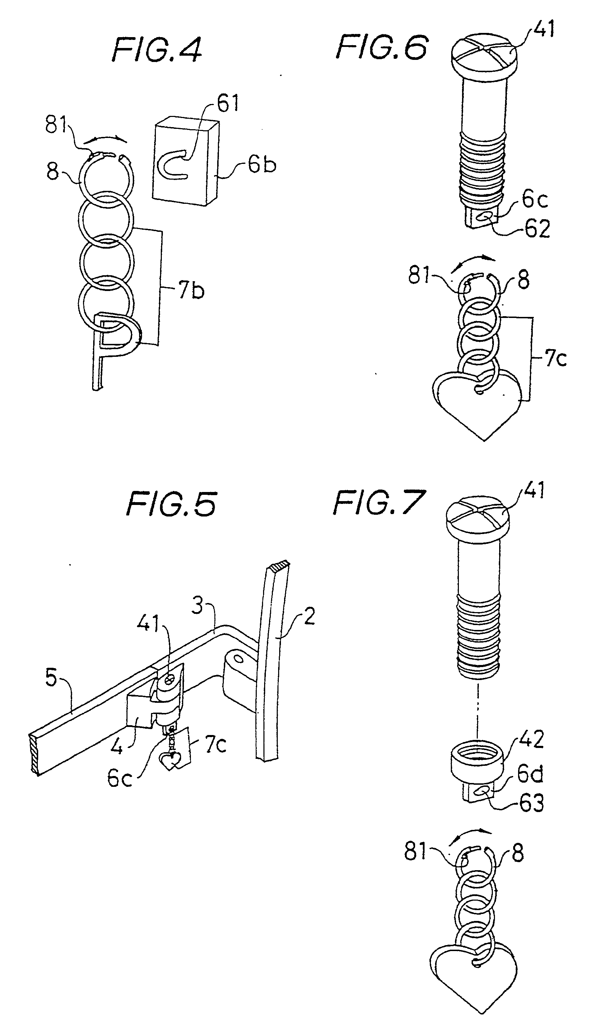

Figure 3 and Figure 4 refer to a second embodiment of the present invention. A rectangular base (6b) is formed from plastic, approximately, for example, 3 millimetres long, 2 millimetres high and 1 millimetre thick. As shown in Figure 4, a loop (61) is connected to the base (6b) and the base (6b) is connected with a hinge (4), for example by an adhesive, as shown in Figure 3. An ornament (7b) is composed of three metal rings and a letter "P" (which expresses, for example, the initial of the wearer). The fastener (8) connects the ornament (7b) to the loop (61). The fastener (8) has the same mechanism (81) as shown in Figure 2. The second embodiment also allows the ornament to be simply and easily removed or exchanged for a different ornament.

Figure 5 and Figure 6 refer to a third embodiment of the present invention. A shaft screw (41) extends through a hinge (4) and has a hanging hole (62) formed in the downwardly projecting end thereof. An ornament (7c) composed of three metal rings and a heart-shaped metal plate is coupled to the screw (41) by way of a fastener (8) extending through the hanging hole (62). The fastener (8) is a clasp which is the same as that shown in Figure 2. Therefore, the third embodiment also allows the exchange of ornaments.

With reference to Figure 7, a fourth embodiment is described. A shaft screw (41) extends through a hinge (4) and the tip of the screw protrudes out of the hinge by approximately 1 millimetre. A cap nut (42) is connected to the protruding screw tip. A joining portion (6d) is formed on the cap nut (42), and a hanging hole (63) is formed therethrough. An ornament can be connected to the hanging hole (63) by way of the fastener (8), as shown in Figure 6. As in the other embodiments, ornaments can be exchanged in a simple manner.

The four preferred embodiments have been now described. This invention, however, is not limited to only the explained embodiments. Various changes or variations can be derived in view of the scope of the appended claims. As an example, in the first embodiment, the sleeve can be made from shape memory alloy wherein the sleeve can be usable at a predetermined temperature. In addition, in the second embodiment shown in Figure 3 and Figure 4, the base can be attached beneath the hinge. Still further, the fastener can be an elliptical shape, a triangular shape, or other closed loop. These variations are within the scope of the present invention.

As explained above, there is provided a hanging ornament for spectacles, wherein ornaments can be hung on the spectacles by way of a fastener. The invention therefore realizes the practical use of various ornaments having different sizes, shapes, and styles to be worn on spectacles in a manner similar to ear-rings. Moreover, the spectacles wearer only has to carry several kinds of small ornaments which can be changed in accordance with the occasion; rather than carrying numerous pairs of spectacles for various occasions. Thus, spectacles can be made suitable to time, place, and opportunity or necessity of the occasion. The ornaments can be exchanged simply and easily. The device of the present invention is also economical in that the style of spectacles can be changed without requiring a new pair of spectacles. The merit and practical use of the present invention is highly valued and appreciated.

## Claims

1 A hanging ornament for use with a pair of spectacles, the hanging ornament comprising an ornamental element (7a, 7b, 7c) and characterized in that the ornamental element (7a, 7b, 7c) is attachable to and removable from the pair of spectacles by way of an attachment means, the attachment means comprising an anchor member (6a, 6b, 6c) for attachment to the pair of spectacles and a fastener (8) for removably connecting the ornamental element (7a, 7b, 7c) to the anchor member (6a, 6b, 6c).

2 A hanging ornament as claimed in Claim 1 characterized in that the anchor member (6a, 6b, 6c) is a sleeve (6a) arranged to be fitted over an arm (5) or end piece (3) of the pair of spectacles.

3 A hanging ornament as claimed in Claim 2 characterized in that the sleeve (6a) is made from a soft synthetic material.

4 A hanging ornament as claimed in Claim 1 characterized in that the anchor member comprises a base (6b) arranged to be attached to the pair of spectacles, the base (6b) being provided with a loop (61) to which the fastener (8) is attachable.

5 A hanging ornament as claimed in Claim 4 characterized in that the base (6b) is arranged to be attached to a hinge (4) of the pair of spectacles.

6 A hanging ornament as claimed in Claim 4 or 5 characterized in that the base (6b) is arranged to be attached to the pair of spectacles by adhesive means.

7 A hanging ornament as claimed in Claim 1 characterized in that the anchor member (6a, 6b, 6c) comprises a shaft screw (41) of a hinge (4) of the pair of spectacles, the shaft screw (41) having a hole (62) formed in a downwardly projecting end (6c) thereof, the fastener (8) being engagable in the hole (62).

8 A hanging ornament as claimed in Claim 1 characterised in that the anchor member comprises a cap nut (42) arranged to be attached to a shaft screw (41) of a hinge (4) of the pair of spectacles, the cap nut (42) having a hole (63) formed therein, the fastener (8) being engagable in the hole (63).

9 A hanging ornament as claimed in any one of the preceding claims characterized in that the fastener (8) is a clasp including a loop which can be opened and closed by movement of a knob portion (81).

10 A pair of spectacles for use with a hanging ornament as claimed in any one of the preceding claims and characterized in that the frame of the pair of spectacles incorporates the anchor member (6a, 6b, 6c) of the hanging ornament.

11 In combination a pair of spectacles and a hanging ornament as claimed in any one of Claims 1 to 9 the anchor member (6a, 6b, 6c) of the ornament being carried by the frame of the spectacles.

12 A combination as claimed in Claim 11 including a further hanging ornament whose anchor member (6a, 6b, 6c) is also carried by said frame.

FIG. 1

# FIG.2

# FIG.3

FIG.4

FIG.6

FIG.5

FIG.7

European Patent Office

**EUROPEAN SEARCH REPORT**

Application Number

EP 91 30 3735

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | US-A-4 968 128 (D. MENDOLA)<br>* Column 2, lines 9-57 *<br>--- | 1-4,9-12 | G 02 C 11/02 |
| X | US-A-2 960 787 (L. QUINONES)<br>* Column 2, lines 38-71 * | 1,10 | |
| A | --- | 2-12 | |
| A | US-A-2 766 541 (L. QUINONES)<br>* Column 2, lines 1-49 *<br>--- | 1-12 | |
| A | US-A-2 778 136 (A.B. BELGARD)<br>* Column 1, lines 57-72; column 2, lines 1-17 *<br>--- | 1-12 | |
| A | US-A-4 471 509 (S.L. MARKS)<br>* Abstract; column 1; column 2, lines 1-9 *<br>--- | 1-12 | |
| A | GB-A- 772 031 (L.G. KRAMER)<br>----- | | |

|  |
|---|
| **TECHNICAL FIELDS SEARCHED (Int. Cl.5)** |
| G 02 C 11/02<br>G 02 C 11/00 |

The present search report has been drawn up for all claims

| Place of search | Date of completion of the search | Examiner |
|---|---|---|
| THE HAGUE | 06-08-1991 | CALLEWAERT-HAEZEBROUCK H |

EPO FORM 1503 03.82 (P0401)